Europäisches Patentamt

European Patent Office

Office européen des brevets

(11) Publication number: **0 237 219**
**A1**

## (12) EUROPEAN PATENT APPLICATION

(21) Application number: 87301529.1

(22) Date of filing: 23.02.87

(51) Int. Cl.⁴: **B60G 11/12** , F16F 1/36 , B60T 8/18

(30) Priority: 13.03.86 GB 8606266

(43) Date of publication of application:
16.09.87 Bulletin 87/38

(84) Designated Contracting States:
ES

(71) Applicant: GKN TECHNOLOGY LIMITED
Birmingham New Road
Wolverhampton West Midlands WV4
6BW(GB)

(72) Inventor: Dimmock, John
33 High Meadows, Compton
Wolverhampton West Midlands WV6
8PH(GB)

(74) Representative: Dodd, Graham Marshall et al
Guest Keen and Nettlefolds plc Group
Patents and Licensing Department P.O. Box
55 Ipsley House Ipsley Church Lane
Redditch Worcestershire B98 0TL(GB)

(54) Leaf springs of composite material.

(57) A leaf spring (l0) of composite material including an end fitting with a clamping member (l4, l5) extending lengthwise of the spring to hold an attachment member (l2, l3) to the spring, wherein the clamping member is provided with a bracket (20) for connection to a member (29) by which the attitude of the spring is transmitted to a transducer (28), e.g. for controlling a load sensitive braking system.

FIG.1.

# LEAF SPRINGS OF COMPOSITE MATERIAL

This invention relates to leaf springs made of composite (fibre-reinforced plastics) material. More particularly, the invention relates to an end fitting by which such a leaf spring is to be secured to a motor vehicle where it is to be used. The general type of end fitting to which the invention relates is disclosed in our published European Patent Application 0070l22.

One feature which may be present on a modern motor vehicle is that some aspect of operation of the motor vehicle is controlled in accordance with the vehicle's load. Particularly, the vehicle's braking system may be so controlled. For example, it is common to include some form of device in the braking system to apportion braking effort between the vehicle's front and rear wheels to reduce any tendency for the rear wheels to lock prematurely and cause loss of control of the vehicle during heavy braking. Particularly for vehicles where the weight carried by a rear axle or axles varies over a wide range between loaded and unloaded conditions of the vehicle, it is desirable to control such an apportioning device to operate at different levels dependent on the load on the vehicle.

The most convenient parameter which may be measured and used to give a signal representing vehicle load is the amount by which the vehicle's suspension is deflected, with the vehicle at rest. In the case of a suspension utilizing leaf springs as the springing medium, the attitude of portions of such springs can conveniently be measured to provide the indication of vehicle loading. It is usual to mount at least one end of a leaf spring relative to the chassis structure of a vehicle for pivotal movement about an axis extending transversely of the spring, in which case the angular position of such spring end provides the indication of load, and it is to a spring suitable for such measurement that the present invention relates.

The angular position of the end portion of a leaf spring may conveniently be measured by connecting a suitable transducer, by way of a suitable mechanical linkage, e.g. an operating rod or arm, to a part of the spring spaced from the axis about which its end portion is pivotally movable. In the case of steel leaf springs hitherto generally used, such connection entails the provision of complex additional components at the spring end. It is not possible, for example, to weld to the spring itself a bracket for connection of the mechanical linkage, because to do so would affect the temper of the spring. Leaf springs made of composite material cannot be drilled for a mechanical connection to the spring, because of the disadvantageous effects thereof on the properties of the spring.

Accordingly there is a requirement for a convenient means of establishing a connection for a mechanical linkage to the end portion of a composite leaf spring, and it is the object of the present invention to meet this requirement.

The present invention provides a leaf spring, of composite material, including, at an end thereof, an attachment member lying in a recess extending transversely of a terminal portion of the spring and held therein by a clamping member extending lengthwise of the spring around said attachment member and terminal portion and having parts extending along spaced surfaces of the spring adjacent said terminal portion and held thereto, wherein said clamping member is provided with a formation for connection to a position transmitting member.

The principal advantage of the invention is that, as the clamping member is required to be present in any event as the means of securing the attachment member to the spring, to modify or add to the clamping member is a relatively convenient and inexpensive step. No modification to the composite material spring itself is required.

The clamping member is preferably of sheet metal, and said formation may comprise a bracket welded thereto. Such welding will usually be carried out before the clamping member is assembled to the spring, and hence damage to the spring from welding in close proximity thereto is avoided.

The invention also provides a motor vehicle in combination with a spring according to the invention, and a transducer mounted on the vehicle body/chassis structure and connected by a transmitting member to the formation of the spring.

The invention will now be described by way of example with reference to the accompanying drawings, of which:-

Figure I is a side elevation of an end portion of a spring according to the invention;

Figure 2 is a view on arrow 2 of Figure I;

Figure 3 is a diagrammatic view of the entire spring and its connection to a vehicle;

Figure 4 is a side elevation of a further embodiment of spring end portion according to the invention.

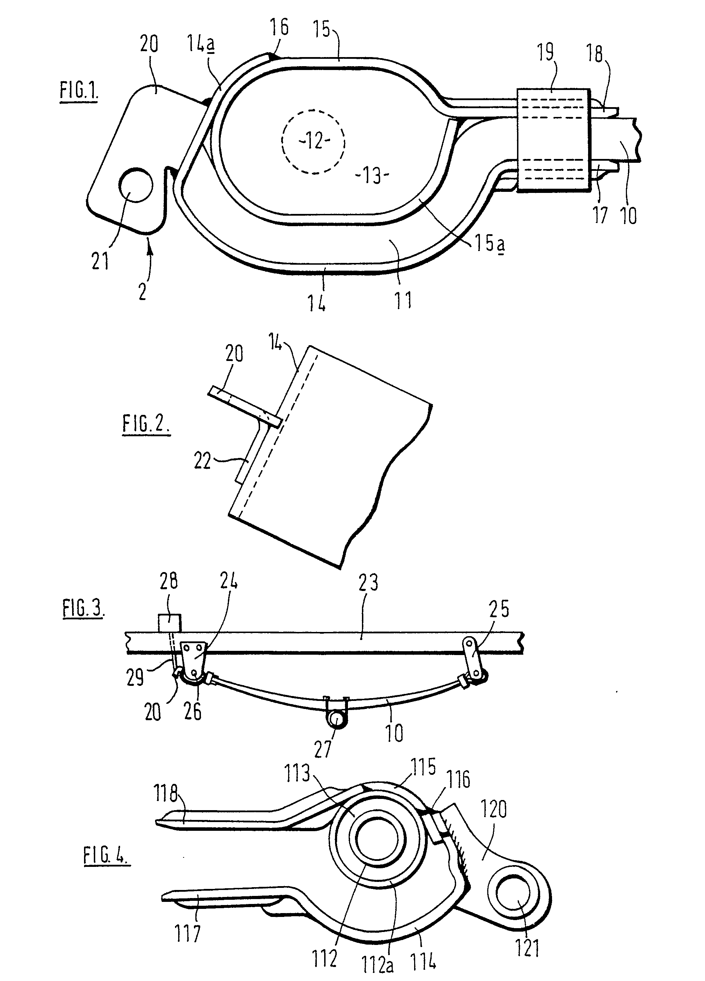

Referring firstly to Figures I and 2 of the drawings, there is shown part of a leaf spring made of composite, fibre-reinforced plastics, material. A terminal portion II of the spring defines a recess extending transversely of the spring, in which is held an attachment member shown diagrammatically as a tubular bush I2 within a rubber element l3. The bush l2 is adapted to receive a bolt or pin by which the spring is to be connected to part of a vehicle, i.e. a shackle or fixed bracket as described hereafter.

The attachment member l2, l3 is held to the spring by a clamping member which comprises two sheet metal parts l4, l5 secured to one another by welding at l6. The part l4 leads into a part l7 which extends along the lower surface of the spring, and the part l5 leads into a part l8 which extends along the upper surface of the spring, adjacent the terminal portion ll of the spring. The part l5 also extends around the attachment member l2, l3 so that the rubber element l3 thereof does not make direct contact with the spring surface in the recess defined by the terminal portion ll of the spring. A sheet metal element l9 extends transversely around the spring adjacent its terminal portion, including the parts l7, l8 of the clamping member, thereby to hold the assembly tightly to the spring. The sheet metal element l9 may be deformed to hold it tightly in position. Parts l7, l8 are provided with reinforcing ribs to increase their rigidity and to provide recesses into which element l9 can be deformed.

A bracket 20, of sheet metal, is welded to the part l4 of the clamping member of the assembly. The bracket affords an aperture 2l for receiving a bolt or clevis pin for attachment to a rod or other position transmitting member.

Referring now to Figure 3 of the drawings, there is shown, diagramatically, a leaf spring l0 in a typical installation in a motor vehicle. A chassis member of the vehicle, or part of an integral body-chassis structure, is indicated at 23 and it supports a fixed spring-mounting bracket 24 and a pivoted spring-mounting shackle 25. The spring l0 has its one end, provided with an end fitting as above described, pivotally connected to the bracket 24 about a bolt 26 passing through bush l2. The other end of the spring is similarly connected to the pivoted shackle 25. An axle 27 is held to the spring approximately centrally between the spring ends, the axle being held by a generally known type of clamped assembly.

A transducer 28 is mounted on the chassis member 23, and is connected by way of an operating rod 29 to the bracket 20 welded to the clamping member of the spring end fitting which is connected to the bracket 24. Thus, as vehicle load increases and the spring l0 is flattened slightly from the part-elliptic shape illustrated, pivotal movement of its end about the bolt 26 provides transducer 28 with a signal which directly represents vehicle load. Transducer 28 may then provide an output which is usable, directly or indirectly, to control the vehicle's braking system to suit the vehicle load. For example, transducer 28 may be a valve in the vehicle's braking system, directly mechanically operated by the rod 29; or it may provide an electrical output signal used in an appropriate control circuit of the vehicle.

Figure 4 of the drawings shows a spring end fitting which is basically similar to that of Figure l, and in which corresponding parts are indicated by the same reference numerals with the addition of l00. Thus, there is a clamping member extending lengthwise of the spring, in two parts ll4, ll5 having portions ll7, ll8 which are arranged to lie against the lower and upper surfaces of the spring adjacent a terminal portion thereof which affords a part-cylindrical recess. The two parts ll4, ll5 of the clamping member are welded together at ll6. An attachment member, in the form of a metal-rubber-metal bush with inner and outer bushes ll2, ll2a, respectively, and an intermediate rubber annulus ll3. The outer metal bush ll2a is welded to the part ll5 of the clamping member, to prevent relative movement therebetween laterally of the spring in the final clamped assembly.

A bracket l20 of sheet metal is welded to the part ll4 of the clamping member, and affords an aperture l2l for attachment to a rod or other position transmitting member. The end fitting assembly of Figure 4 would be used in a motor vehicle in the same manner as above described in relation to Figures l to 3.

Although we have described spring end fittings wherein formations in the form of brackets are secured by welding to parts of clamping members, it will be appreciated that brackets or formations of other form are within the scope of the invention. For example, in manufacturing a part of the clamping member by pressing from sheet metal, an integral bracket may be incorporated. Further, a bracket or other formation need not be at the particular position on the clamping member above described and illustrated, although in a typical installation it is convenient for it to be beyond the end of the spring where it is clear of other components.

**Claims**

l. A leaf spring (l0) of composite material including, at an end thereof, an attachment member - (l2, l3, ll2, ll2a, ll3) lying in a recess extending transversely of a terminal portion (ll) of the spring and held therein by a clamping member (l4, l5, ll4, ll5) extending lengthwise of the spring around said attachment member and terminal portion and having parts (l7, l8, ll7, ll8) extending along spaced surfaces of the spring adjacent said terminal portion and held thereto, wherein said clamping member (l4, l5, ll4, ll5) is provided with a formation (20, l20) providing for connection to a position transmitting member (29).

2. A spring according to Claim l wherein said clamping member (l4, l5, ll4, ll5) and formation (20, l20) are of sheet metal.

3. A spring according to Claim 2 wherein said formation comprises a bracket (20, l20) welded to said clamping member (l4, l5, ll4, ll5).

4. A spring according to Claim 3 wherein said bracket (20, l20) extends beyond the end of the spring (l0).

5. A motor vehicle including a vehicle body and/or chassis structure (23), a spring (l0) according to any one of the preceding claims having its ends mounted to said vehicle structure, a transducer (28) mounted on said vehicle structure, and a position transmitting member (29) connecting said transducer and formation (20, l20) of the spring.

FIG.1.

FIG.2.

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 132 074 (G.K.N.)<br>* Abstract; figures 1,5 * | 1-2 | B 60 G 11/12<br>F 16 F 1/36<br>B 60 T 8/18 |
| A | EP-A-0 034 327 (KNORR-BREMSE)<br>* Page 3, lines 20-35; figure 1 * | 1,5 | |
| A | GB-A-1 308 730 (S.A.B)<br>* The whole document * | 1,5 | |
| A | GB-A-2 028 513 (ATSUGI MOTOR PARTS CO.)<br>* Abstract; figure 1 * | 1,5 | |
| | | | TECHNICAL FIELDS SEARCHED (Int. Cl.4) |
| | | | F 16 F 1<br>B 60 G 11<br>B 60 G 17<br>B 60 T 8 |

The present search report has been drawn up for all claims

| Place of search | Date of completion of the search | Examiner |
|---|---|---|
| THE HAGUE | 01-06-1987 | LINTZ C.H. |